(19) **Europäisches Patentamt / European Patent Office / Office européen des brevets**

(11) **EP 3 058 398 B1**

(12) **FASCICULE DE BREVET EUROPEEN**

(45) Date de publication et mention de la délivrance du brevet:
**28.04.2021 Bulletin 2021/17**

(21) Numéro de dépôt: **14786977.0**

(22) Date de dépôt: **25.08.2014**

(51) Int Cl.:
*G01V 99/00* *(2009.01)*

(86) Numéro de dépôt international:
**PCT/FR2014/052118**

(87) Numéro de publication internationale:
**WO 2015/055904 (23.04.2015 Gazette 2015/16)**

(54) **PROCÉDÉ ET DISPOSITIF POUR LA DÉTERMINATION CONTRÔLÉE DE CANAUX**

VERFAHREN UND GERÄT FÜR DIE BESTIMMUNG VON KANÄLE

METHOD AND DEVICE FOR THE CONTROLLED DETERMINATION OF CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2013 FR 1359960**

(43) Date de publication de la demande:
**24.08.2016 Bulletin 2016/34**

(73) Titulaire: **TOTAL SE**
**92400 Courbevoie (FR)**

(72) Inventeur: **MASSONNAT, Gérard**
**F-64000 Pau (FR)**

(74) Mandataire: **Plasseraud IP**
**66, rue de la Chaussée d'Antin**
**75440 Paris Cedex 09 (FR)**

(56) Documents cités:
**EP-A1- 1 926 033     US-A1- 2013 144 579**

**Description**

La présente invention concerne le domaine la détermination de modèles géologiques maillés et en particulier, de modèles maillés validant un certain nombre de contraintes dynamiques propres.

Pour la détermination adéquate des réserves en hydrocarbures contenus dans un réservoir, il est utile d'établir des grilles (ou modèles maillés) de réservoirs, par exemple sur la base de l'interprétation sismique 3D du sous-sol.

Ces modèles doivent être déterminés afin de représenter le plus fidèlement possible le sous-sol réel contenant le réservoir.

Dans l'industrie pétrolière, un test de puits peut permettre de mieux comprendre les propriétés des hydrocarbures et de déterminer les caractéristiques du réservoir dans lequel les hydrocarbures sont piégés. Le plus souvent, un test de puits comprend alternativement l'ouverture (phase dite de « draw down » en anglais) et la fermeture (phase dite de « build up » en anglais) du puits considéré : les variations de débit et de pression dans le temps sont alors enregistrées. Le document « Well testing interpretation method (Fundamentals of Exploration and Production), Gilles Bourdarot, Institut Français du Pétrole Publications, ISSN 1271-9048 » ou le document « Well test analysis: the use of advanced interpretation method, Dominique Bourdet, Elsevier, ISBN 0444509682 » présentent un certain nombre de méthodes d'interprétation de ces variations de débit et de pression.

Un des objectifs d'un test de puits peut être de déterminer la capacité du réservoir pour la production des hydrocarbures, comme le pétrole ou le gaz naturel.

Un autre objectif d'un tel test peut être descriptif, i.e. permettant de déterminer les géométries et les caractéristiques du réservoir (i.e. porosité des roches, présence de limites, etc.).

On appelle « contraintes dynamiques de modélisation » l'ensemble des informations déterminées à l'aide de ces tests de puits (ex. volume connecté au puits, présence de limites dans le réservoir et distance(s) associée(s), propriété d'écoulement des fluides vers le puits, porosité des roches, perméabilité etc.).

Afin de satisfaire les contraintes dynamiques de modélisation, les ingénieurs puits ou les géologues déterminent, le plus souvent, un grand nombre de modèles « candidats » à l'aide de méthodologies connues (comme, par exemple, celles décrites dans la demande de brevet FR1257649, pour la détermination de chenaux) puis éliminent les modèles ne satisfaisant pas à ces contraintes dynamiques (avec éventuellement une marge de tolérance donnée). US2013/144579 et EP1926033 divulguent des procédés pour la détermination des trajectoires de chenaux.

Cependant, de telles méthodes ne sont pas exemptes de défauts.

En effet, seuls un petit nombre de modèles (portant une part éventuelle d'aléatoire) satisfont statistiquement aux contraintes dynamiques.

Ainsi, le calcul complet des modèles qui sont amenés à terme à être écartés peut être consommateur en ressources de calcul et ralentir considérablement la détermination d'un modèle adéquat.

Il y a ainsi un besoin pour prendre en compte les contraintes dynamiques le plus en amont possible lors de la détermination de modèle géologique afin d'optimiser les ressources de calcul.

La présente invention vient améliorer la situation.

A cet effet, la présente invention propose de prendre en compte les présences de limites dans le réservoir et/ou les contraintes de volumes dans la détermination de modèles géologiques.

La présente invention vise alors un procédé mis en œuvre par ordinateur pour la détermination contrôlée de chenaux à partir d'un modèle comportant au moins :

- un espace de points, lesdits points ayant des coordonnées dans ledit espace,

- une représentation d'un puits dans ledit espace, ladite représentation ayant des coordonnées dans ledit espace, une distance de limite minimale étant associée à ladite représentation.

Le procédé comporte les étapes :

- détermination d'une première trajectoire de chenal dans ledit modèle, ladite première trajectoire comportant un premier habillage, ledit premier habillage étant tangent intérieurement à une forme polaire de centre appartenant à la représentation et de rayon ladite distance de limite minimale associée à ladite représentation, ledit habillage étant tangent au niveau d'un point de tangence minimal ;

- détermination d'au moins une zone d'exclusion minimale dans ledit modèle en fonction dudit point de tangence minimal ;

- détermination d'au moins une seconde trajectoire de chenal dans ledit modèle, ladite seconde trajectoire comportant un second habillage, l'intersection entre la au moins une zone d'exclusion minimale et ledit second habillage étant vide et détermination d'une union entre ladite première trajectoire et ladite au moins seconde trajectoire.

L'étape de détermination d'au moins une seconde trajectoire est réitérée si au moins une condition est validée dans un groupe de conditions comportant : /c1/ l'intersection entre ladite représentation du puits et ladite union déterminée est vide.

La distance de limite minimale est une distance au sens mathématique et peut correspondre à de nombreuses distances différentes. De plus, il est possible que la distance soit une fonction de la direction dans l'espace du modèle.

La forme polaire de centre appartenant à la représentation et de rayon ladite distance de limite minimale peut être, par exemple, un cercle ou un carré (cas 2D) ou une sphère ou un cube (cas 3D) si la distance de limite minimale est indépendante des directions de l'espace. Par ailleurs, cette forme polaire peut être un cylindre possédant un axe de révolution verticale.

On appelle « habillage » un ensemble de mailles ou de points situés à proximité de la trajectoire associée et définissant dans le modèle un chenal. Ce chenal peut être composé de différents faciès définis en amont par un opérateur, par exemple.

Lorsque l'étape de détermination d'au moins une seconde trajectoire est réitérée, l'union déterminée dans cette étape est « augmentée » à chaque fois d'une nouvelle trajectoire.

La condition /c1/ permet de générer le nombre de secondes trajectoires nécessaires afin de connecter le puits au réseau de trajectoires déterminées précédemment (première ou secondes).

De plus, le groupe de conditions peut comporter en outre :
/c2/ l'intersection des points du modèle situé à une distance inférieure à la distance de limite minimale de ladite représentation et du complémentaire de ladite union forme au moins un ensemble de points continu d'au moins un nombre prédéterminé de points.

La condition /c2/ permet de générer le nombre de secondes trajectoires nécessaires afin de s'assurer qu'il n'existe pas de « bloc » de points de taille importante. L'existence de tels « blocs » pourrait être vue comme une limite détectable et située à une distance inférieure à la distance de limite minimale.

L'évaluation du nombre de points d'un ensemble peut être déterminée en fonction :

- du nombre de points absolu de l'ensemble ;

- du nombre de points « visibles » depuis la représentation du puits ;

- de l'angle solide de l'ensemble de points vu depuis la représentation du puits ;

- etc.

Dans un mode de réalisation de l'invention, le groupe de conditions peut également comporter:
/c3/ l'intersection des points du modèle situé à une distance inférieure à la distance de limite minimale de ladite représentation et de ladite union déterminée dans l'espace forme une pluralité d'ensembles de points discontinus.

La condition /c3/ permet de générer le nombre de secondes trajectoires nécessaires afin de s'assurer que tous les chenaux déterminés constituent un unique réseau de chenaux dans la zone située à une distance inférieure de la distance de limite minimale. En effet, s'il existait une pluralité de réseaux déconnectés, une autre limite pourrait exister à une distance inférieure à la distance de limite minimale.

En outre, une seconde distance de limite étant associée à ladite représentation, la méthode peut comprendre en outre :

- détermination d'une troisième trajectoire de chenal dans ledit modèle, ladite troisième trajectoire comportant un troisième habillage, ledit troisième habillage étant tangent intérieurement à une forme polaire de centre appartenant à la représentation et de rayon ladite seconde distance de limite, ledit habillage étant tangent au niveau d'un second point de tangence ;

- détermination d'au moins une seconde zone d'exclusion dans ledit modèle en fonction dudit second point de tangence ;

et dans lequel :

- l'intersection entre la au moins une seconde zone d'exclusion et ledit premier habillage ou le au moins un deuxième habillage ou le troisième habillage est vide.

- l'intersection entre la au moins une zone d'exclusion minimale et le troisième habillage est vide.

En particulier, le second point de tangence, un point appartenant à la représentation et le point de tangence minimal peuvent être alignés.

Dans un mode de réalisation alternatif, une première droite passant par :

- le second point de tangence et

- un point appartenant à la représentation

et une deuxième droite passant par :

- le point appartenant à la représentation et

- le point de tangence minimal

peuvent former un angle compris entre 180° et un angle prédéterminé.

L'angle prédéterminé est un angle proche de l'angle 180°. Par exemple, il peut correspondre à un angle de 160° ou de 170°.

En complément ou en variante du procédé décrit ci-dessus, un modèle peut comporter au moins :

- un espace de points, lesdits points ayant des coordonnées dans ledit espace,

- une valeur minimale de volume connecté ;

- au moins une représentation d'un puits dans ledit espace, ladite représentation ayant des coordonnées dans ledit espace, une distance de limite minimale associée à ladite représentation,

Alors, le procédé peut comporter les étapes, pour chaque représentation courante dans la au moins une représentation de puits :

/a/ détermination d'une première trajectoire de chenal dans ledit modèle, ladite première trajectoire comportant un premier habillage, ledit premier habillage comprenant la au moins une représentation du puits et ajout de ladite première trajectoire à un ensemble de trajectoires ;

/b/ détermination d'au moins une seconde trajectoire de chenal dans ledit modèle, ladite seconde trajectoire comportant un second habillage ;

/c/ si la seconde trajectoire est connectée à une trajectoire de l'ensemble de trajectoires, ajout de ladite seconde trajectoire à l'ensemble de trajectoires, sinon réitération des étapes /b/ et /c/ ;

/d/ détermination d'un volume connecté en fonction des trajectoires de l'ensemble de trajectoires, et si le volume déterminé est inférieur à la valeur minimale, réitération des étapes /b/ et /c/.

Les étapes /a/, /b/ peuvent être les mêmes que les étapes précédemment décrites.

Ce procédé permet de déterminer de nouveaux chenaux tant que le volume minimal n'est pas atteint.

Dans un mode particulier de l'invention, ledit modèle comportant au moins une valeur maximale de volume connecté, le procédé peut comporter en outre :

/a_{bis}/ détermination d'une valeur cible de volume connecté entre la valeur minimal et la valeur maximale ;

/b_{bis}/ détermination d'au moins une quatrième trajectoire de chenal dans ledit modèle, ladite quatrième trajectoire comportant un quatrième habillage ;

/c_{bis}/ détermination d'un premier volume connecté en fonction des trajectoires de l'ensemble de trajectoires et détermination d'un deuxième volume connecté en fonction des trajectoires de l'ensemble de trajectoires et de la quatrième trajectoire,

/d_{bis}/ si la quatrième trajectoire est connectée à une trajectoire de l'ensemble de trajectoires et si le premier volume déterminé est inférieur ou égal à la valeur cible, ajout de ladite quatrième trajectoire à l'ensemble de trajectoires et réitération des étapes /b_{bis}/, /C_{bis}/, /d_{bis}/, et /e_{bis}/ ;

/e_{bis}/ si la quatrième trajectoire est connectée à une trajectoire de l'ensemble de trajectoires et si le deuxième volume déterminé est supérieur à la valeur cible :

- ajout de ladite quatrième trajectoire à l'ensemble de trajectoires et réitération des étapes /b_{bis}/, /c_{bis}/, /d_{bis}/, et /e_{bis}/ si une distance entre le deuxième volume et la valeur cible est inférieure à une distance entre le premier volume et la valeur cible ;

Bien entendu, il est possible de mettre en œuvre ce mode de réalisation particulier indépendamment des autres modes de réalisation proposés.

De plus, la valeur cible peut être la valeur maximale.

Un dispositif destiné à la détermination contrôlée de chenaux à partir d'un modèle peut être avantageux, en lui-même, dès lors qu'il permet de prendre en compte des contraintes dynamique pour la génération de chenaux.

Ainsi, la présente invention vise également un dispositif destiné à mettre en œuvre tout ou partie du procédé décrit précédemment.

Un programme informatique, mettant en œuvre tout ou partie du procédé décrit ci-avant, installé sur un équipement préexistant, est en lui-même avantageux, dès lors qu'il permet la détermination contrôlée de chenaux à partir d'un modèle.

Ainsi, la présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

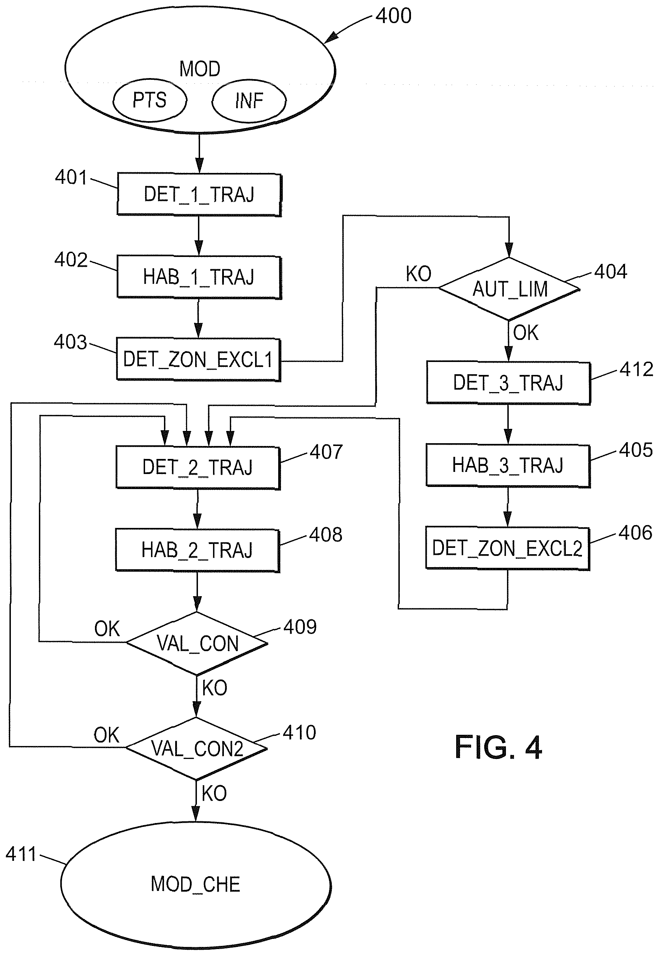

La figure 4 décrite en détails ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 illustre un exemple de courbe de variation de pression durant un test de puits et durant une phase dite de « build up » illustrant une détermination de limites ;

- la figure 2 illustre un exemple de réalisation de modèle comportant une représentation de puits dans un mode de réalisation selon l'invention ;

- les figures 3a et 3b illustrent des coupes horizontales d'un modèle dans un mode de réalisation de l'invention ;

- la figure 3c illustre une coupe verticale d'un modèle dans un mode de réalisation de l'invention ;

- la figure 4 représente un exemple d'ordinogramme pouvant représenter une mise en œuvre possible de l'invention ;

- la figure 5 représente un dispositif permettant de mettre en œuvre un mode de réalisation de l'invention.

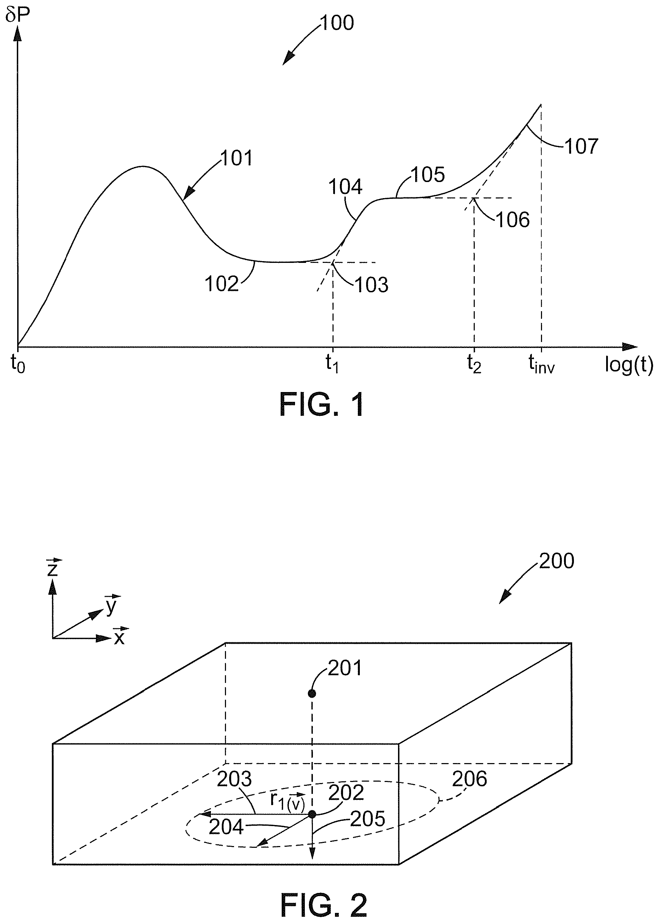

La figure 1 illustre un exemple de courbe 100 de variation de pression durant un test de puits et plus précisément durant une phase dite de « build up ».

Lors de la fermeture d'un puits de production (et correspondant au $t_0$ de la courbe de la figure 1). La variation de pression 101 en sortie de puits évolue dans un deuxième temps se stabiliser (zone 102, correspondant à une augmentation constante de la pression du puits).

Si la variation de pression augmente brutalement (zone 104) puis se re-stabilise (zone 105), les ingénieurs puits peuvent interpréter ce phénomène par la présence dans le réservoir connecté au puits d'une limite (ex. la présence d'une zone du sous-sol ne contenant pas d'hydrocarbures ou de gaz, présence de roches imperméables, etc.). Le temps $t_1$ d'apparition d'un tel phénomène (zone 103) peut leur permettre de déterminer la distance $r_1$ de cette première limite au puits. Ces déterminations peuvent utiliser des méthodes telles que décrites dans les ouvrages cités précédemment.

En cas de présence d'une deuxième limite dans le réservoir (sensiblement à l'opposé de la première limite), la courbe de variation de pression présente alors une croissance (zone 107) à partir d'un instant $t_2$ (zone 106). Le temps $t_2$ d'apparition d'un tel phénomène (zone 106) peut permettre aux ingénieurs puits de déterminer la distance $r_2$ de cette deuxième limite au puits.

Il est également possible de définir une distance d'investigation correspondant au temps $t_{inv}$ à partir duquel les données de variation de pression ne sont plus disponibles ou ne sont plus considérées comme fiables.

La figure 2 illustre un exemple de réalisation de modèle 200 comportant une représentation de puits dans un mode de réalisation selon l'invention.

Le plus souvent, un puits peut être représenté dans un modèle par une ligne verticale passant par un premier point 201 (le point de forage ou la tête du puits) et par un deuxième point 202 (ou un ensemble de points 202). Le point ou l'ensemble de points 202 correspond à une zone du puits comportant des perforations et permettant de connecter le sous-sol au puits pour en extraire des hydrocarbures. Le point ou l'ensemble de points 202 est appelé « représentation d'un puits » par simplification.

Lors de la détermination d'une limite comme décrit précédemment en lien avec la figure 1 par exemple, il est possible de déterminer une zone 206 autour du point 202 et représentant des points potentiels d'existence de cette limite. Sur cette figure la distance d'une extrémité de cette zone au point 202 peut varier en fonction de la direction. Par exemple, la distance représentée par le vecteur 203 peut être différente de la distance représentée par le vecteur 204 (tous deux dans le plan $(\vec{x}, \vec{y})$). Cette différence peut notamment s'expliquer par la connaissance de contraintes particulières (ex. anisotropie du sous-sol). De même, la distance représentée par le vecteur 203 peut être différente de la distance représentée par le vecteur 205 (la distance verticale étant souvent connue comme étant plus faible que les distances horizontales, les couches géologiques étant principalement horizontales).

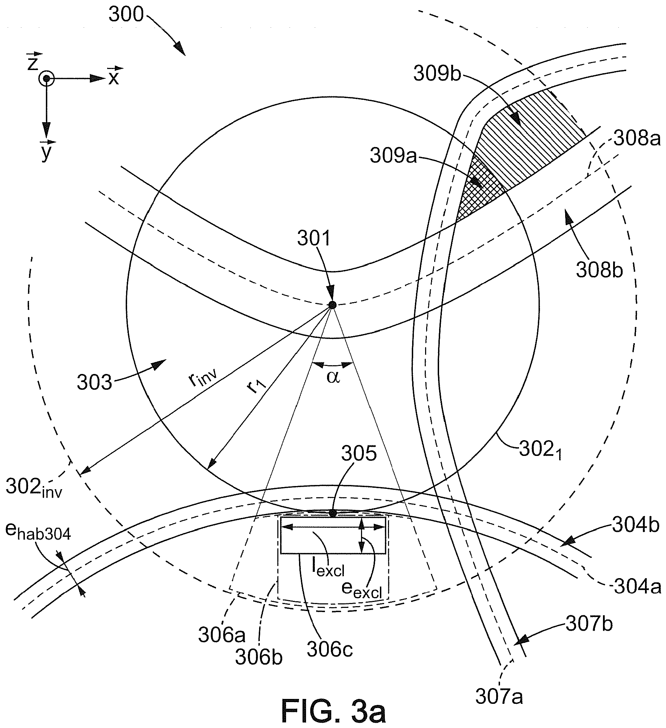

La figure 3a illustre une coupe horizontale 300 d'un modèle dans un mode de réalisation de l'invention.

Cette coupe 300 est réalisée de telle sorte que le point 301 corresponde à une zone de la représentation d'un puits.

Dans cet exemple, la première distance $r_1$ représente une distance de limite minimale et est constante dans toutes les directions du plan de coupe $(\vec{x}, \vec{y})$. La distance $r_{inv}$ représente une distance d'investigation et est constante dans toutes les directions du plan de coupe $(\vec{x}, \vec{y})$. Dans d'autres exemples, les distances $r_1$ et $r_{inv}$ peuvent varier en fonction de la direction considérée. La distance $r_1$ définit la forme polaire $302_1$ (ici un cercle de rayon $r_1$ et de centre le point 301) et la distance $r_{inv}$ définit la forme polaire $302_{inv}$ (ici un cercle de rayon $r_{inv}$ et de centre le point 301).

Dans un premier temps, il est possible de déterminer une première trajectoire 304a. Cette trajectoire peut notamment être déterminée à l'aide d'un procédé tel que décrit par la demande de brevet FR1060053 ou FR1257649

Cette trajectoire est déterminée de telle sorte que l'habillage 304b de cette trajectoire 304a soit tangent à la forme polaire $302_1$ (ici un cercle, le rayon r1 étant constant dans toutes les directions du plan de coupe $(\vec{x}, \vec{y})$) au niveau du point 305, aussi appelé « point de tangence minimal. » Bien entendu, il est possible de considérer que l'habillage est tangent à la forme polaire même si cette tangence est imparfaite : le modèle étant le plus souvent discret du fait du maillage de celui-ci, il est possible de prévoir une valeur de tolérance (ex. un angle limite) en dessous duquel l'habillage est considéré comme tangent. Afin de s'assurer que la tangence est assurée au niveau de l'habillage, il est possible de réduire la distance $r_1$ d'une demi-épaisseur d'habillage $e_{hab304}$ au niveau du point de tangence 305 et de déterminer une nouvelle forme polaire de centre le point 301 et de rayon

$$r_1 - \frac{e_{hab304}}{2}$$

et de déterminer la trajectoire 304a afin qu'elle soit tangente à cette nouvelle forme polaire.

Une fois la trajectoire 304a et l'habillage 304b de cette trajectoire déterminée, il est possible de déterminer une zone d'exclusion dans le modèle dans lequel aucune trajectoire et aucun habillage ne sont déterminés. Cette zone d'exclusion peut être par exemple :

- la zone 306a définie par une zone comprise entre la forme polaire $302_1$ et la forme polaire $302_{inv}$ et dans un angle $\alpha$ à partir du point 301 et centré sur le point 305 ;

- la zone 306b définie par une zone comprise entre la forme polaire $302_1$ et la forme polaire $302_{inv}$ et ayant une largeur $l_{excl}$ donnée ;

- la zone 306c définie par une zone comprise au-delà de la forme polaire $302_1$ tangente à celle-ci, ayant une largeur $l_{excl}$ donnée et une épaisseur $e_{excl}$ donnée.

Bien entendu, d'autres formes de zones d'exclusion sont possibles et des combinaisons de formes comme décrites précédemment sont envisageable.

Il est alors possible de déterminer une nouvelle trajectoire 307a et un nouvel habillage associé 307b au sein du modèle 300. Cette détermination peut également être effectuée selon une méthode telle que décrite dans les demandes précédemment citées.

Aucun point de cette trajectoire ou de cet habillage n'appartient à la zone d'exclusion telle que définie précédemment.

Il est rappelé que la distance $r_1$ est représentative de l'existence d'une limite située à cette distance $r_1$ détectée depuis le puits. Ainsi, il est utile que ce dernier (ou plus précisément la représentation de celui-ci) soit connecté à l'habillage 304b. Ainsi, si le puits n'est pas connectée à l'habillage 304b au travers d'autres habillages, il peut être utile de déterminer de nouveaux habillages jusqu'à temps que le puits 301 soit connecté : si l'union des habillages 304b et 307b ne comporte pas le puits 301, de nouvelles trajectoires (308a) et de nouveaux habillages (308b) sont déterminées.

De plus, a contrario, si la distance $r_1$ est représentative de l'existence d'une limite minimale, cela peut également signifier qu'il n'existe aucune limite (ou de limite détectable par les méthodes actuelles) dans la zone délimité par la forme polaire $302_1$. En conséquence, il peut être utile de déterminer de nouvelles trajectoires et de nouveaux habillages tant que la zone délimité par la forme polaire $302_1$ comporte des zones (309a) de taille importante et n'appartenant à aucun habillage. La taille de chaque zone peut, par exemple, être évaluée :

- en nombre de points ;

- en volume ;

- en surface ;

- en valeur d'angle solide vu depuis le point 301.

La valeur limite en dessous de laquelle la zone 309a est considérée comme étant trop importante peut être fixée en fonction de la sensibilité des instruments de mesures disponibles. Dans un mode de réalisation, cette limite peut être fixée à zéro.

Par ailleurs (et s'il n'existe pas d'autres limites détectées, par exemple, dans la limite de la zone d'investigation, i.e. de la forme polaire $302_{inv}$), il est également possible de déterminer de nouvelles trajectoires et de nouveaux habillages. Cette détermination est réalisée tant que la zone délimitée par la forme polaire $302_{inv}$ comporte des zones (309a et 309b) de taille importante et n'appartenant à aucun habillage.

Bien entendu, dans ce dernier cas, les zones d'exclusions déterminées peuvent ne pas être prises en compte dans la détermination de ces zones de taille importante puisque, par définition, les zones d'exclusion ne peuvent pas comporter d'habillage. De plus, les zones « masquées » par les zones d'exclusions (i.e. les zones de la forme polaire $302_{inv}$ mais situées derrière les zones d'exclusions par rapport à la représentation du puits 301) peuvent ne pas être prises en compte dans la détermination des zones de taille importante.

Enfin, et de manière non limitative, si la distance $r_1$ est représentative de l'existence d'une limite minimale, cela peut également signifier que l'ensemble des points situés dans la zone délimitée par la forme polaire $302_1$ et appartenant à un habillage est connecté au puits. En effet, si certains points des habillages présents dans cette zone ne sont pas connectés aux puits (i.e. il n'existe pas de chemins passant par des habillages permettant de relier la représentation du puits et ce point, le chemin étant compris dans la forme $302_1$), cela peut signifier que plusieurs réseaux d'habillage coexistent au sein de la forme $302_1$ sans être connectés entre eux : ainsi, une limite plus proche que la limite symbolisée par la distance $r_1$ aurait dû être détectée. En conséquence, il peut être utile de déterminer de nouvelles trajectoires et de nouveaux habillages si cette dernière condition n'est pas validée.

Cette condition peut également être reformulée en considérant l'intersection entre :

- la zone formée de la zone polaire $302_1$, et

- l'union des habillages déterminés dans le modèle.

Si cette intersection forme une pluralité d'ensembles de points connectés (i.e. continus), alors cette condition est considérée comme étant validée.

Par ailleurs (et s'il n'existe pas d'autres limites détectées par exemple dans la limite de la zone d'investigation, i.e. de la forme polaire $302_{inv}$), il est également possible de déterminer de nouvelles trajectoires et de nouveaux habillages tant que la zone délimitée par la forme polaire $302_{inv}$ comporte des habillages déconnectés de la représentation du puits.

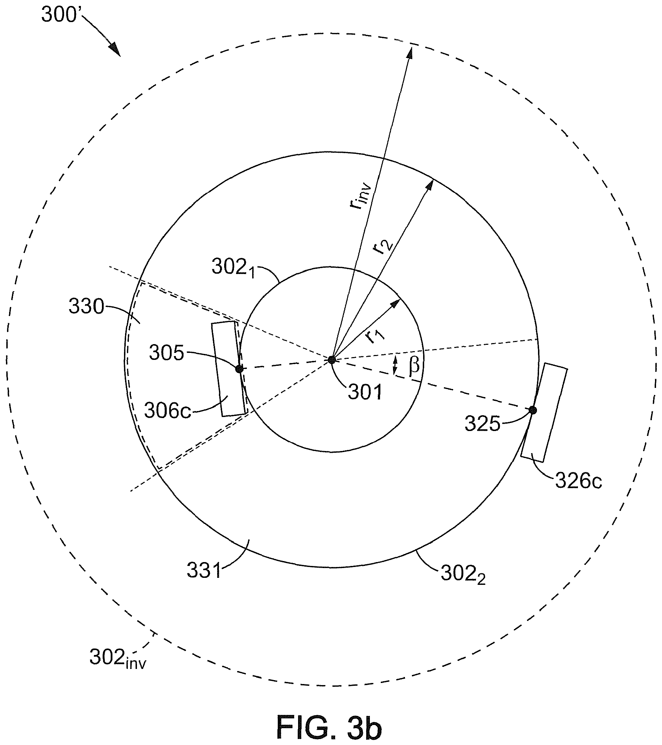

La figure 3b illustre un autre exemple de coupe horizontale 300' d'un modèle dans un mode de réalisation de l'invention.

Dans cette coupe, deux limites ont été déterminées :

- une limite située au point 305 et représentée par la zone d'exclusion 306c. Cette limite est située à une distance $r_1$ de la représentation du puits 301 ;

- une limite située au point 325 et représentée par la zone d'exclusion 326c. Cette limite est située à une distance $r_2$ de la représentation du puits 301 ;

Comme indiqué précédemment en relation avec la figure 1, la détection d'une deuxième limite lors d'un test de puits peut permettre de savoir si celle-ci est située sensiblement à l'opposé de la première limite. En effet, la signature de la courbe de variation de pression peut être caractéristique d'une telle situation.

Ainsi, le plus souvent, il convient de considérer que les points 305, 301 et 325 sont alignés. Bien entendu, du fait de la discrétisation du modèle et de la précision limitée des outils de détection de variation de pression, ces points peuvent également ne pas être parfaitement alignés : par exemple, l'angle formé par les droites (305-301) et (301-325) peut être dans la limite de $180° \pm \varepsilon$ avec $\varepsilon$ un angle fixé par un opérateur. Dans le cas de la figure 3b, $\beta \leq \varepsilon$.

Dans une situation à deux limites, il est possible d'ajouter de nouvelles conditions devant être validées par le modèle, faute de quoi de nouvelles trajectoires et de nouveaux habillages sont déterminés :

- la zone comprise entre la forme polaire $302_1$ et la forme polaire $302_2$ ne comporte pas d'ensemble de points continus et n'appartenant pas à un habillage de plus d'un nombre prédéterminé de points. Pour cette condition, il est possible d'exclure de la zone comprise entre la forme polaire $302_1$ et la forme polaire $302_2$ la zone masquée par les zones d'exclusion du modèle, ici en l'espèce, la zone 330 masquée par la zone d'exclusion 306c. Cette zone 330 est la zone formée par un secteur la zone comprise entre la forme polaire $302_1$ et la forme polaire $302_2$ et d'angle solide défini par la zone d'exclusion : ainsi la zone comprise entre la forme polaire $302_1$ et la forme polaire $302_2$ et ne devant pas comporter d'ensemble de points continus n'appartenant pas à un habillage de plus d'un nombre prédéterminé de points est la zone 331 ;

- les habillages présents dans la zone comprise entre la forme polaire $302_1$ et la forme polaire $302_2$ (a l'exclusion éventuelle de la zone 330 comme expliqué ci-dessus) ne forment pas d'ensembles discontinus de zones.

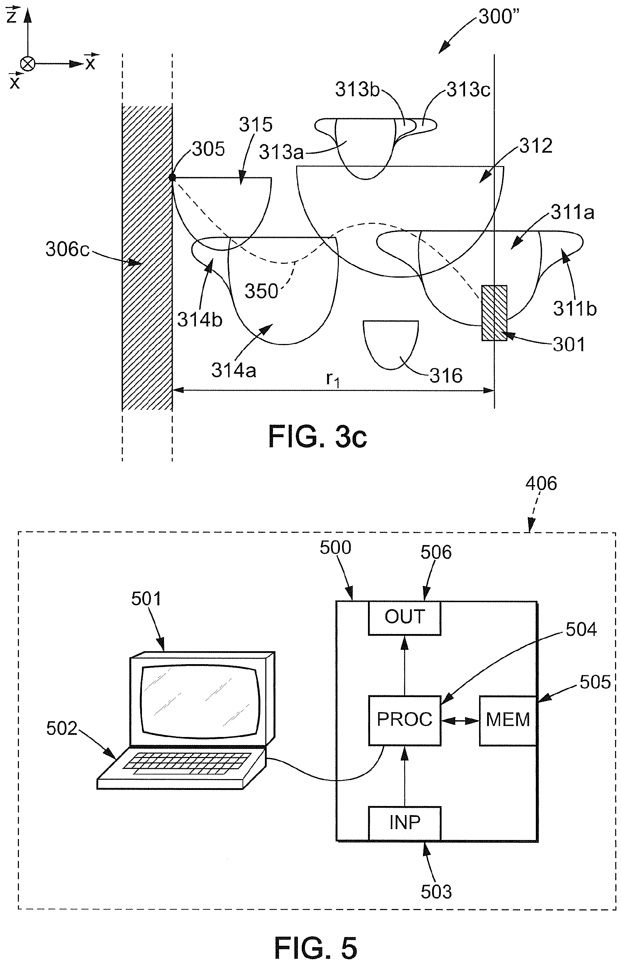

La figure 3c illustre une coupe verticale d'un modèle 300" dans un mode de réalisation de l'invention.

Si les figures 3a et 3b représentent des coupes horizontales, les modèles peuvent être des modèles en trois dimensions et permettre une représentation par coupes verticales.

Dans cet exemple, la représentation du puits 301 peut comporter une pluralité de mailles du modèle superposées. En outre, la zone d'exclusion 306c peut comporter une pluralité de mailles du modèle réparties dans un parallélépipède donné.

Les habillages des chenaux peuvent comporter différentes tailles, formes ou compositions. A titre d'illustration, un chenal peut être constitué d'un unique faciès dans le modèle comme les chenaux 315, 312 ou 316. Les chenaux peuvent également comporter plusieurs faciès (ex. présence d'un lit de chenal mais également d'accrétions, de lobes, de levées, etc.) : par exemple, la zone 314b est une zone d'accrétion du chenal 314a, la zone 313b ou 313c est une zone d'accrétion du chenal 313a, la zone 311 b est une zone d'accrétion du chenal 311 a.

Un chenal peut comporter un grand nombre d'éléments constitutifs mais on appelle « habillage » les seuls éléments parmi ces éléments constitutifs qui sont considérés comme permettant une circulation et/ou un stockage d'hydrocarbures de façon suffisante (ou selon d'autres critères propres, notamment des critères géophysiques). Ainsi, l'ingénieur puits ou tout autre opérateur peut sélectionner les éléments qui selon lui font partie de l'habillage au sens de l'invention.

L'union des habillages présentés dans la figure 3c comprend deux ensembles d'habillages non connectés (ou discontinus) :

- un premier ensemble comprenant l'habillage 316 ;

- un deuxième ensemble comprenant les habillages 315, 314b-314a, 312, 313a-313b-313c et 311a-311b.

Dans le deuxième ensemble, il est possible d'identifier au moins un chemin 350 permettant de relier la représentation du puits 301 au point de tangence de limite minimale 305.

La figure 4 représente un exemple d'ordinogramme pouvant représenter une mise en œuvre possible de l'invention.

Sur réception d'un modèle 400, il est possible de réaliser une détermination contrôlée de chenaux. Ce modèle 400 reçu comporte un espace de points (PTS) et diverses informations (INF) comme une représentation d'un puits dans cet espace ou l'indication d'une distance de limite minimale associée à cette représentation.

Une fois reçu, il est possible de déterminer (étape 401) une première trajectoire de chenal dans ce modèle 400.

Alors, il est possible d'habiller (étape 402) cette trajectoire avec une enveloppe ou « habillage ». L'habillage peut être de largeur constante mais il peut également fluctuer le long de cette trajectoire. En tout état de cause, celui-ci est déterminé de telle sorte qu'il soit tangent intérieurement à une forme polaire de centre le puits et de rayon la distance de limite minimale reçue.

En fonction du point de tangence de cette zone d'exclusion à la forme polaire, il est possible de déterminer (étape 403) au moins une zone d'exclusion minimale comme décrit précédemment.

Dès lors, il est possible de s'interroger sur l'existence d'une deuxième limite dans le modèle. Cela est le cas si une seconde distance de limite est associée à la représentation de puits.

Si une autre limite existe (test 404, sortie OK), il est alors possible de déterminer une troisième trajectoire de chenal (étape 412). Cette troisième trajectoire possède un habillage (étape 405) dans les mêmes conditions telles que décrites précédemment et cet habillage est tangent intérieurement à la forme polaire de centre appartenant au puits (ou plus précisément à sa représentation dans le modèle) et de rayon cette autre distance de limite.

Enfin, il est possible de déterminer au moins une seconde zone d'exclusion du point de tangence de ce dernier habillage avec la forme polaire.

Bien entendu, la seconde zone d'exclusion ne possède pas de point en commun avec le premier habillage déterminé à l'étape 402 ou avec tout autre habillage déterminé à l'étape 405. De plus, le troisième habillage ne possède pas de point commun avec la zone d'exclusion minimale déterminée à l'étape 403.

Si aucune autre limite n'existe (test 404, sortie KO) ou si toutes les étapes 412, 405 et 406 sont terminées, une seconde trajectoire de chenal est déterminée (étape 407). Grâce à cette dernière trajectoire, il est possible de déterminer un habillage correspondant comme décrit précédemment (étape 408). Bien sûr, ce dernier habillage ne comporte pas de point commun avec une zone d'exclusion déterminée précédemment (étape 403 ou étape 406).

Si une des conditions suivantes est validée (test 409, sortie OK) les étapes 407 et 408 peuvent être réitérer :

- la représentation du puits n'appartient à aucun habillage déterminé précédemment (étape 402 ou 405 ou 408).

- il existe une zone d'au moins un nombre prédéterminé de points dans la zone située à une distance inférieure à la distance de limite minimale et n'appartenant à aucun habillage.

- les habillages ne sont pas tous connectés dans la zone située à une distance inférieure à la distance de limite minimale.

De plus, il peut exister d'autres conditions faisant réitérer les étapes 407 et 408 si ces dernières ne sont pas validées (test 410, sortie OK). Il est possible que le test 409 ou le test 410 soit l'unique test effectué dans le procédé décrit en relation à la figure 4.

Par exemple, le modèle peut comporter en outre une valeur minimale de volume connecté. Il est alors possible de déterminer le volume d'hydrocarbures connecté au puits et présents dans les habillages déterminés dans les étapes précédentes. Le volume connecté peut être le volume des habillages pour lesquels il existe une trajectoire dans les habillages déterminés passant par un point de l'habillage considéré et par le puits. Ce volume peut être pondéré par un facteur de pondération (par exemple, lié à la porosité du sous-sol au niveau des habillages considérés). Ce volume peut être également fonction d'une distance d'exploration, par exemple, les volumes situés au-delà de cette distance n'étant pas prise en compte pour la détermination du volume connecté (ou étant prise en compte avec une pondération décroissante en fonction de la distance).

Si la valeur minimale de volume connecté n'est pas atteinte, il est possible de déterminer de nouvelles trajectoires et de nouveaux habillages (étape 407 et 408).

Si la valeur minimale de volume connecté est dépassée, on retient cette dernière trajectoire. Il peut arriver dans certaines conditions extrêmes qu'il soit impossible de valider les conditions du test 409 et les conditions du test 410. Si au bout d'un nombre donné d'itérations, il est constaté que les conditions du test 410 ne peuvent être satisfaites (totalement ou partiellement, ex. la valeur minimal de volume étant très grande, il n'est pas possible de l'atteindre même en connectant toutes les zones situées à une distance inférieure à la distance d'investigation, ainsi, la valeur calculée comme étant connectée ne change plus durant un nombre prédéterminé d'itérations), une alerte pourra être levée.

De plus, le test 410 peut comporter une condition relative à une valeur maximale de volume connecté. Dans cette hypothèse, il est possible de déterminer une valeur cible de volume connecté entre la valeur minimal et la valeur maximale : cette détermination peut être effectuée selon un procédé stochastique (linéaire ou gaussien par exemple).

Une fois cette détermination d'une valeur cible, il est possible de déterminer une nouvelle trajectoire de chenal (étape 407) et un nouvel habillage (étape 408).

Cette nouvelle trajectoire et ce nouvel habillage ne sont retenus dans le modèle finale que :

- si le volume connecté avec ce nouvel habillage est toujours inférieur à cette valeur cible ; ou

- si le volume connecté avec ce nouvel habillage est supérieur à cette valeur cible et si la distance du volume connecté avec ce nouvel habillage à la valeur cible est inférieure à la distance du volume connecté sans ce nouvel habillage à la valeur cible.

Par ailleurs, si le volume connecté avec ce nouvel habillage est toujours inférieur à cette valeur cible, les étapes 407 et 408 sont réitérées.

Une fois toutes les conditions des tests 409 et 410 invalidées, le modèle 411 comportant les nouvelles trajectoires et nouveaux habillages est retourné.

Par ailleurs, le schéma fonctionnel présenté sur la figure 4 est un exemple typique d'un programme dont certaines instructions peuvent être réalisées auprès du dispositif décrit. A ce titre, la figure 4 peut correspondre à l'organigramme de l'algorithme général d'un programme informatique au sens de l'invention.

La figure 5 représente un exemple de dispositif dans un mode de réalisation de l'invention.

Dans ce mode de réalisation, le dispositif comporte un ordinateur 500, comprenant une mémoire 505 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 504. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 503 pour la réception de données de mesures, et une interface de sortie 506 pour la fourniture de modèles. Enfin, l'ordinateur peut comporter, pour permettre une interaction aisée avec un utilisateur, un écran 501 et un clavier 502. Bien entendu, le clavier est facultatif, notamment dans le cadre d'un ordinateur ayant la forme d'une tablette tactile, par exemple.

Bien entendu, la présente invention ne se limite pas aux formes de réalisation décrites ci-avant à titre d'exemples ; elle s'étend à d'autres variantes.

D'autres réalisations sont possibles.

Par exemple, les exemples donnés en référence aux figures concernent des modèles en trois dimensions mais une réalisation de l'invention sur la base d'un modèle en deux dimensions est également réalisable.

## Revendications

1. Procédé mis en œuvre par ordinateur pour la détermination contrôlée de chenaux à partir d'un modèle comportant au moins :

   - un espace de points (300), lesdits points ayant des coordonnées dans ledit espace,
   - une représentation (301) d'un puits dans ledit espace, ladite représentation ayant des coordonnées dans ledit espace, une distance de limite minimale ($r_1$) étant associée à ladite représentation,

   dans lequel le procédé comporte les étapes :

   - détermination d'une première trajectoire (304a) de chenal dans ledit modèle, ladite première trajectoire comportant un premier habillage (304b), ledit premier habillage étant tangent intérieurement à une forme polaire (302) de centre (301) appartenant à la représentation et de rayon ladite distance de limite minimale associée à ladite représentation, ledit habillage étant tangent au niveau d'un point de tangence minimal (305) ;
   - détermination d'au moins une zone d'exclusion minimale (306a, 306b, 306c) dans ledit modèle en fonction dudit point de tangence minimal;
   - détermination d'au moins une seconde trajectoire de chenal dans ledit modèle, ladite seconde trajectoire (307a) comportant un second habillage (307b), l'intersection entre la au moins une zone d'exclusion minimale et ledit second habillage étant vide et détermination d'une union entre ladite première trajectoire et ladite au moins seconde trajectoire ;

   et dans lequel l'étape de détermination d'au moins une seconde trajectoire est réitérée si au moins une condition est validée dans un groupe de conditions comportant :
   /c1/ l'intersection entre ladite représentation du puits et ladite union déterminée est vide.

2. Procédé selon la revendication 1, dans lequel le groupe de conditions comporte en outre :
   /c2/ l'intersection des points du modèle situé à une distance inférieure à la distance de limite minimale de ladite représentation et du complémentaire de ladite union forme au moins un ensemble de points continu d'au moins un nombre prédéterminé de points.

3. Procédé selon l'une des revendications précédentes, dans lequel le groupe de conditions comporte en outre :

/c3/ l'intersection des points du modèle situé à une distance inférieure à la distance de limite minimale de ladite représentation et de ladite union déterminée dans l'espace forme une pluralité d'ensembles de points discontinus.

4. Procédé selon l'une des revendications précédentes, dans lequel, une seconde distance de limite étant associée à ladite représentation, la méthode comprend en outre :

- détermination d'une troisième trajectoire de chenal dans ledit modèle, ladite troisième trajectoire comportant un troisième habillage, ledit troisième habillage étant tangent intérieurement à une forme polaire de centre appartenant à la représentation et de rayon ladite seconde distance de limite, ledit habillage étant tangent au niveau d'un second point de tangence ;
- détermination d'au moins une seconde zone d'exclusion dans ledit modèle en fonction dudit second point de tangence ;

et dans lequel :

- l'intersection entre la au moins une seconde zone d'exclusion et ledit premier habillage ou le au moins un deuxième habillage ou le troisième habillage est vide.
- l'intersection entre la au moins une zone d'exclusion minimale et le troisième habillage est vide.

5. Procédé selon la revendication 4, dans lequel le second point de tangence, un point appartenant à la représentation et le point de tangence minimal sont alignés.

6. Procédé selon la revendication 4, dans lequel une première droite passant par le second point de tangence et un point appartenant à la représentation et une deuxième droite passant par le point appartenant à la représentation et le point de tangence minimal forment un angle compris entre 180° et un angle prédéterminé.

7. Procédé mis en œuvre par ordinateur pour la détermination contrôlée de chenaux à partir d'un modèle comportant au moins :

- un espace de points, lesdits points ayant des coordonnées dans ledit espace,
- une valeur minimale de volume connecté ;
- au moins une représentation d'un puits dans ledit espace, ladite représentation ayant des coordonnées dans ledit espace, une distance de limite minimale associée à ladite représentation,

dans lequel le procédé comporte les étapes, pour chaque représentation courante dans la au moins une représentation de puits :

/a/ détermination d'une première trajectoire de chenal dans ledit modèle, ladite première trajectoire comportant un premier habillage, ledit premier habillage comprenant la au moins une représentation du puits et ajout de ladite première trajectoire à un ensemble de trajectoires ;
/b/ détermination d'au moins une seconde trajectoire de chenal dans ledit modèle, ladite seconde trajectoire comportant un second habillage ;
/c/ si la seconde trajectoire est connectée à une trajectoire de l'ensemble de trajectoires, ajout de ladite seconde trajectoire à l'ensemble de trajectoires, sinon réitération des étapes /b/ et /c/ ;
/d/ détermination d'un volume connecté en fonction des trajectoires de l'ensemble de trajectoires, et si le volume déterminé est inférieur à la valeur minimale, réitération des étapes /b/ et /c/.

8. Procédé selon la revendication 7, dans lequel, ledit modèle comportant au moins une valeur maximale de volume connecté, le procédé comporte en outre :

/a$_{bis}$/ détermination d'une valeur cible de volume connecté entre la valeur minimal et la valeur maximale ;
/b$_{bis}$/ détermination d'au moins une quatrième trajectoire de chenal dans ledit modèle, ladite quatrième trajectoire comportant un quatrième habillage ;
/$_{Cbis}$/ détermination d'un premier volume connecté en fonction des trajectoires de l'ensemble de trajectoires et détermination d'un deuxième volume connecté en fonction des trajectoires de l'ensemble de trajectoires et de la quatrième trajectoire,
/d$_{bis}$/ si la quatrième trajectoire est connectée à une trajectoire de l'ensemble de trajectoires et si le premier volume déterminé est inférieur ou égal à la valeur cible, ajout de ladite quatrième trajectoire à l'ensemble de trajectoires et réitération des étapes /b$_{bis}$/, /C$_{bis}$/, /d$_{bis}$/, et /e$_{bis}$/ ;
/e$_{bis}$/ si la quatrième trajectoire est connectée à une trajectoire de l'ensemble de trajectoires et si le deuxième volume déterminé est supérieur à la valeur cible :

- ajout de ladite quatrième trajectoire à l'ensemble de trajectoires et réitération des étapes /b$_{bis}$/, /c$_{bis}$/, /d$_{bis}$/, et /e$_{bis}$/ si une distance entre le deuxième volume et la valeur cible est inférieure à une distance entre le premier volume et la valeur cible ;

9. Procédé selon la revendication 8, dans lequel la valeur cible est la valeur maximale

10. Dispositif de détermination contrôlée de chenaux à partir d'un modèle comportant au moins :

    - un espace de points (300), lesdits points ayant des coordonnées dans ledit espace,
    - une représentation (301) d'un puits dans ledit espace, ladite représentation ayant des coordonnées dans ledit espace, une distance de limite minimale $(r_1)$ étant associée à ladite représentation,

    dans lequel le dispositif comporte :

    - un circuit adapté pour déterminer une première trajectoire (304a) de chenal dans ledit modèle, ladite première trajectoire comportant un premier habillage (304b), ledit premier habillage étant tangent intérieurement à une forme polaire (302) de centre (301) appartenant à la représentation et de rayon ladite distance de limite minimale associée à ladite représentation, ledit habillage étant tangent au niveau d'un point de tangence minimal (305) ;
    - un circuit adapté pour déterminer au moins une zone d'exclusion minimale (306a, 306b, 306c) dans ledit modèle en fonction dudit point de tangence minimal;
    - un circuit adapté pour déterminer au moins une seconde trajectoire de chenal dans ledit modèle, ladite seconde trajectoire (307a) comportant un second habillage (307b), l'intersection entre la au moins une zone d'exclusion minimale et ledit second habillage étant vide et détermination d'une union entre ladite première trajectoire et ladite au moins seconde trajectoire ;

    et dans lequel le circuit adapté pour déterminer au moins une seconde trajectoire est apte à réitérer ladite dernière étape si au moins une condition est validée dans un groupe de conditions comportant :
    /c1/ l'intersection entre ladite représentation du puits et ladite union déterminée est vide.

11. Produit programme informatique comportant des instructions pour la mise en œuvre du procédé selon l'une des revendications 1 à 9, lorsque ce programme est exécuté par un processeur.

**Patentansprüche**

1. Computer-implementiertes Verfahren zur kontrollierten Bestimmung von Kanälen aus einem Modell, umfassend wenigstens:

    - einen Raum von Punkten (300), wobei die Punkte Koordinaten in diesem Raum aufweisen,
    - eine Darstellung (301) einer Bohrung in dem Raum, wobei die Darstellung Koordinaten in dem Raum umfasst, wobei der Darstellung ein minimaler Grenzabstand $(r_1)$ zugeordnet ist,

    wobei das Verfahren folgende Schritte umfasst:

    - Bestimmen einer ersten Kanaltrajektorie (304a) in dem Modell, wobei die erste Trajektorie eine erste Überdeckung (304b) umfasst, wobei die erste Überdeckung innen tangential mit einer polaren Form (302) ist, umfassend eine Mitte (301), die ein Teil der Darstellung ist, und umfassend einen Radius, der der minimale Grenzabstand ist, in Zuordnung zu der Darstellung, wobei die Überdeckung an einem Punkt minimaler Tangierung (305) tangential ist;
    - Bestimmen wenigstens einer minimalen Ausschlusszone (306a, 306b, 306c) in dem Modell in Abhängigkeit von dem Punkt der minimalen Tangierung;
    - Bestimmen wenigstens einer zweiten Kanaltrajektorie in dem Modell, wobei die zweite Trajektorie (307a) eine zweite Überdeckung (307b) umfasst, wobei die Schnittstelle zwischen der wenigstens einen minimalen Ausschlusszone und der zweiten Überdeckung leer ist, und Bestimmen einer Vereinigung zwischen der ersten Trajektorie und der wenigstens zweiten Trajektorie;

    und wobei der Schritt des Bestimmens wenigstens einer zweiten Trajektorie wiederholt wird, wenn wenigstens eine Bedingung in einer Gruppe von Bedingungen erfüllt wird, umfassend:
    /c1/ die Schnittstelle zwischen der Darstellung der Bohrung und der bestimmten Vereinigung ist leer.

2. Verfahren nach Anspruch 1, wobei die Gruppe von Bedingungen ferner umfasst:
    /c2/ die Schnittstelle der Punkte des Modells, die sich in einem Abstand befinden, der kleiner ist als der minimale Grenzabstand der Darstellung und des Komplements der Vereinigung, bildet wenigstens eine kontinuierliche Anordnung von Punkten mit wenigstens einer vorbestimmten Anzahl von Punkten.

3. Verfahren nach einem der vorhergehenden Ansprüche, wobei die Gruppe von Bedingungen ferner umfasst:
    /c3/ die Schnittstelle der Punkte des Modells, die sich in einem Abstand befinden, der kleiner ist als der minimale Grenzabstand der Darstellung und der im Raum bestimmten Vereinigung bildet eine Mehrzahl diskontinuierlicher Anordnungen von Punkten.

4. Verfahren nach einem der vorhergehenden Ansprüche, wobei der Darstellung ein zweiter Grenzabstand zugeordnet ist, wobei das Verfahren ferner umfasst:

    - Bestimmen einer dritten Kanaltrajektorie in dem Modell, wobei die dritte Trajektorie eine dritte Überdeckung aufweist, wobei die dritte Überdeckung innen tangential mit einer polaren Form ist, umfassend eine Mitte, die ein Teil der Darstellung ist, und umfassend einen Radius, der der zweite Grenzabstand ist, wobei die Überdeckung an einem zweiten Tangierungspunkt tangential ist;

    - Bestimmen wenigstens einer zweiten Ausschlusszone in dem Modell in Abhängigkeit von dem zweiten Tangierungspunkt;

und wobei:

    - die Schnittstelle zwischen der wenigstens einen zweiten Ausschlusszone und der ersten Überdeckung oder der wenigstens einen zweiten Überdeckung oder der dritten Überdeckung leer ist,

    - die Schnittstelle zwischen der wenigstens einen minimalen Ausschlusszone und der dritten Überdeckung leer ist.

5. Verfahren nach Anspruch 4, wobei der zweite Tangierungspunkt, ein zur Darstellung gehörender Punkt und der Punkt minimaler Tangierung aufeinander ausgerichtet werden.

6. Verfahren nach Anspruch 4, wobei eine erste Gerade, die durch den zweiten Tangierungspunkt und einen zur Darstellung gehörenden Punkt verläuft, und eine zweite Gerade, die durch den zur Darstellung gehörenden Punkt und den Punkt minimaler Tangierung verläuft, einen Winkel zwischen 180° und einem vorgegebenen Winkel bilden.

7. Computer-implementiertes Verfahren zur kontrollierten Bestimmung von Kanälen aus einem Modell, umfassend wenigstens:

    - einen Raum von Punkten, wobei die Punkte Koordinaten in diesem Raum aufweisen,

    - einen Minimalwert zusammenhängenden Volumens;

    - wenigstens eine Darstellung einer Bohrung in dem Raum, wobei die Darstellung Koordinaten in dem Raum aufweist, wobei der Darstellung ein minimaler Grenzabstand zugeordnet ist,

wobei das Verfahren für jede aktuelle Darstellung in der wenigstens einen Darstellung der Bohrung die folgenden Schritte umfasst:

    /a/ Bestimmen einer ersten Kanaltrajektorie in dem Modell, wobei die erste Trajektorie eine erste Überdeckung umfasst, wobei die erste Überdeckung die wenigstens eine Darstellung der Bohrung umfasst, und Hinzufügen der ersten Trajektorie zu einer Annordnung von Trajektorien;

    /b/ Bestimmen wenigstens einer zweiten Kanaltrajektorie in dem Modell, wobei die zweite Trajektorie eine zweite Überdeckung umfasst;

    /c/ wenn die zweite Trajektorie mit einer Trajektorie der Anordnung von Trajektorien verbunden ist, Hinzufügen der zweiten Trajektorie zu der Anordnung von Trajektorien, andernfalls Wiederholung der Schritte /b/ und /c/;

    /d/ Bestimmen eines zusammenhängenden Volumens in Abhängigkeit von den Trajektorien der Anordnung von Trajektorien, und wenn das bestimmte Volumen kleiner als der Minimalwert ist, Wiederholen der Schritte /b/ und /c/.

8. Verfahren nach Anspruch 7, wobei das Modell wenigstens einen Maximalwert des zusammenhängenden Volumens aufweist, wobei das Verfahren ferner umfasst:

    /$a_{bis}$/ Bestimmen eines Zielwertes des zusammenhängenden Volumens zwischen dem Minimalwert und dem Maximalwert;

    /$b_{bis}$/ Bestimmen wenigstens einer vierten Kanaltrajektorie in dem Modell, wobei die vierte Trajektorie eine vierte Überdeckung umfasst;

    /$c_{bis}$/ Bestimmen eines ersten zusammenhängenden Volumens in Abhängigkeit von den Trajektorien der Anordnung von Trajektorien und Bestimmen eines zweiten zusammenhängenden Volumens in Abhängigkeit von den Trajektorien der Anordnung von Trajektorien und der vierten Trajektorie,

    /$d_{bis}$/ wenn die vierte Trajektorie mit einer Trajektorie der Anordnung von Trajektorien verbunden ist und das erste bestimmte Volumen kleiner oder gleich dem Zielwert ist, Hinzufügen der vierten Trajektorie zu der Anordnung von Trajektorien und Wiederholen der Schritte /$b_{bis}$/, /$C_{bis}$/, /$d_{bis}$/, und /$e_{bis}$/;

    /$e_{bis}$/ wenn die vierte Trajektorie mit einer Trajektorie der Anordnung von Trajektorien verbunden ist und das zweite bestimmte Volumen größer als der Zielwert ist:

        - Hinzufügen der vierten Trajektorie zu der Anordnung von Trajektorien und Wiederholen der Schritte /$b_{bis}$/, /$C_{bis}$/, /$d_{bis}$/, und /$e_{bis}$/,

wenn ein Abstand zwischen dem zweiten Volumen und dem Zielwert kleiner ist als ein Abstand zwischen dem ersten Volumen und dem Zielwert;

**9.** Verfahren nach Anspruch 8, wobei der Zielwert der Maximalwert ist.

**10.** Vorrichtung zur kontrollierten Bestimmung von Kanälen aus einem Modell, umfassend wenigstens:

- einen Raum von Punkten (300), wobei die Punkte Koordinaten in diesem Raum aufweisen,
- eine Darstellung (301) einer Bohrung in dem Raum, wobei die Darstellung Koordinaten in dem Raum aufweist, wobei der Darstellung ein minimaler Grenzabstand ($r_1$) zugeordnet ist,

wobei die Vorrichtung umfasst:

- eine Schaltung, die dazu ausgebildet ist, eine erste Kanaltrajektorie (304a) in dem Modell zu bestimmen, wobei die erste Trajektorie eine erste Überdeckung (304b) umfasst, wobei die erste Überdeckung innen tangential mit einer polaren Form (302) ist, umfassend eine Mitte (301), die ein Teil der Darstellung ist, und umfassend einen Radius, der der minimale Grenzabstand ist, in Zuordnung zu der Darstellung, wobei die Überdeckung an einem Punkt minimaler Tangierung (305) tangential ist;
- eine Schaltung, die dazu ausgebildet ist, wenigstens eine minimale Ausschlusszone (306a, 306b, 306c) in dem Modell in Abhängigkeit von dem Punkt minimaler Tangierung zu bestimmen;
- eine Schaltung, die dazu ausgebildet ist, wenigstens eine zweite Kanaltrajektorie in dem Modell zu bestimmen, wobei die zweite Trajektorie (307a) eine zweite Überdeckung (307b) umfasst, wobei die Schnittstelle zwischen der wenigstens einen minimalen Ausschlusszone und der zweiten Überdeckung leer ist, und Bestimmen einer Vereinigung der ersten Trajektorie und der wenigstens einen zweiten Trajektorie;

und wobei die Schaltung, die dazu ausgebildet ist, wenigstens eine zweite Trajektorie zu bestimmen, dazu geeignet ist, den letzten Schritt zu wiederholen, wenn wenigstens eine Bedingung in einer Gruppe von Bedingungen erfüllt ist, umfassend:
/c1/ die Schnittstelle zwischen der Darstellung der Bohrung und der bestimmten Vereinigung ist leer.

**11.** Computerprogrammprodukt, umfassend Anweisungen zum Implementieren des Verfahrens nach einem der Ansprüche 1 bis 9, wenn das Programm von einem Prozessor ausgeführt wird.

**Claims**

**1.** Method, implemented by computer, for the controlled determination of channels on the basis of a model comprising at least:

- a space of points (300), said points having coordinates in said space,
- a representation (301) of a well in said space, said well representation having coordinates in said space, a minimum distance to boundary (r1) being associated with said representation,

wherein the method comprises the steps of:

- determining a first channel path (304a) in said model, said first path having a first casing (304b), said first casing being internally tangent to a polar form (302) having a center (301) that is part of the representation and having a radius that is said minimum distance to boundary associated with said representation, said casing being tangential at a point of minimum tangency (305);
- determining at least one minimum exclusion region (306a, 306b, 306c) in said model as a function of said point of minimum tangency;
- determining at least one second channel path in said model, said second path (307a) having a second casing (307b), the intersection of the at least one minimum exclusion region and said second casing being empty, and determining a union between said first path and said at least one second path;

and wherein the step of determining at least one second path is repeated if at least one condition is satisfied in a set of conditions comprising:
/c1/ the intersection of said well representation and said determined union is empty.

**2.** Method according to claim 1, wherein the set of conditions further comprises:
/c2/ the intersection of the points of the model located at a distance less than the minimum distance to boundary of said representation and the complement of said union forms at least one continuous set of points of at least a predetermined number of points.

**3.** Method according to one of the preceding claims, wherein the set of conditions further comprises:
/c3/ the intersection of the points of the model located at a distance less than the minimum distance to boundary of said representation and said determined union in the space forms a plurality of sets of points that are discrete.

4. Method according to one of the preceding claims, wherein, a second distance to boundary being associated with said representation, the method further comprises:

- determining a third channel path in said model, said third path having a third casing, said third casing being internally tangent to a polar form having a center that is part of the representation and having a radius that is said second distance to boundary, said casing being tangential at a second point of tangency;
- determining at least one second exclusion region in said model as a function of said second point of tangency;

and wherein:

- the intersection of the at least one second exclusion region and said first casing or the at least one second casing or the third casing is empty.
- the intersection of the at least one minimum exclusion region and the third casing is empty.

5. Method according to claim 4, wherein the second point of tangency, a point that is part of the representation, and the point of minimum tangency are aligned.

6. Method according to claim 4, wherein a first straight line passing through the second point of tangency and a point that is part of the representation, and a second straight line passing through the point that is part of the representation and the point of minimum tangency, form an angle that is between 180° and a predetermined angle.

7. Method, implemented by computer, for the controlled determination of channels on the basis of a model comprising at least:

- a space of points, said points having coordinates in said space,
- a minimum connected volume value;
- at least one representation of a well in said space, said well representation having coordinates in said space, a minimum distance to boundary being associated with said representation,

wherein the method comprises the following steps, for each current representation in the at least one well representation:

/a/ determining a first channel path in said model, said first path having a first casing, said first casing comprising the at least one well representation, and adding said first path to a set of paths;
/b/ determining at least one second channel path in said model, said second path having a second casing;
/c/ if the second path is connected to a path in the set of paths, adding said second path to the set of paths, otherwise repeating steps /b/ and /c/;
/d/ determining a connected volume as a function of the paths in the set of paths, and if the determined volume is less than the minimum value, repeating steps /b/ and /c/.

8. Method according to claim 7, wherein, said model having at least one maximum connected volume value, the method further comprises:

/$a_{bis}$/ determining a target connected volume value that is between the minimum value and the maximum value;
/$b_{bis}$/ determining at least a fourth channel path in said model, said fourth path having a fourth casing;
/$c_{bis}$/ determining a first connected volume as a function of the paths in the set of paths, and determining a second connected volume as a function of the paths in the set of paths and of the fourth path;
/$d_{bis}$/ if the fourth path is connected to a path in the set of paths and if the first determined volume is less than or equal to the target value, adding said fourth path to the set of paths and repeating steps /$b_{bis}$/, /$C_{bis}$/, /$d_{bis}$/, and /$e_{bis}$/;
/$e_{bis}$/ if the fourth path is connected to a path in the set of paths and if the second determined volume is greater than the target value:

- adding said fourth path to the set of paths and repeating steps /$b_{bis}$/, /$c_{bis}$/, /$d_{bis}$/, and /$e_{bis}$/ if a distance between the second volume and the target value is less than a distance between the first volume and the target value.

9. Method according to claim 8, wherein the target value is the maximum value.

10. Device for the controlled determination of channels on the basis of a model comprising at least:

- a space of points (300), said points having coordinates in said space,
- a representation (301) of a well in said space, said well representation having coordinates in said space, a minimum distance to boundary ($r_1$)

being associated with said representation,

wherein the device comprises:

- a circuit adapted to determine a first channel path (304a) in said model, said first path having a first casing (304b), said first casing being internally tangent to a polar form (302) having a center (301) that is part of the representation and having a radius that is said minimum distance to boundary associated with said representation, said casing being tangential at a point of minimum tangency (305);
- a circuit adapted to determine at least one minimum exclusion region (306a, 306b, 306c) in said model as a function of said point of minimum tangency;
- a circuit adapted to determine at least one second channel path in said model, said second path (307a) having a second casing (307b), the intersection of the at least one minimum exclusion region and said second casing being empty, and to determine a union between said first path and said at least one second path;

and wherein the circuit adapted to determine at least one second path is adapted to repeat said last step if at least one condition is satisfied in a set of conditions comprising:
/c1/ the intersection of said well representation and said determined union is empty.

11. Computer program product comprising instructions for implementing the method according to one of claims 1 to 9, when said program is executed by a processor.

FIG. 1

FIG. 2

FIG. 3a

FIG. 3b

FIG. 3c

FIG. 5

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1257649
- US 2013144579 A
- EP 1926033 A
- FR 1060053

**Littérature non-brevet citée dans la description**

- **GILLES BOURDAROT.** Well testing interpretation method (Fundamentals of Exploration and Production). Institut Français du Pétrole Publications
- **DOMINIQUE BOURDET.** Well test analysis: the use of advanced interpretation method. Elsevier